(19) **Europäisches Patentamt / European Patent Office / Office européen des brevets**

(11) **EP 2 634 607 A1**

(12) **EUROPEAN PATENT APPLICATION**
published in accordance with Art. 153(4) EPC

(43) Date of publication:
04.09.2013 Bulletin 2013/36

(21) Application number: 11836140.1

(22) Date of filing: 20.10.2011

(51) Int Cl.:
$G02B\ 5/08$ (2006.01)      $B32B\ 15/08$ (2006.01)

(86) International application number:
PCT/JP2011/074226

(87) International publication number:
WO 2012/057004 (03.05.2012 Gazette 2012/18)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 27.10.2010 JP 2010240515

(71) Applicant: Konica Minolta, Inc.
Tokyo 100-7015 (JP)

(72) Inventor: EGURO, Yayoi
Hachioji-shi
Tokyo 192-8505 (JP)

(74) Representative: Gille Hrabal
Patentanwälte
Brucknerstrasse 20
40593 Düsseldorf (DE)

(54) **FILM MIRROR, PROCESS FOR MANUFACTURING FILM MIRROR, AND REFLECTION DEVICE FOR SOLAR POWER GENERATION PURPOSES**

(57) A film mirror comprising at least an adhesive layer, a silver reflective layer and a protective layer arranged in this order as constituent layers on a resin base, and characterized in that the surface roughness (Ra) of the light incident side of each of the resin base, the silver reflective layer and the protective layer is 0,005-0.04 $\mu$m.

EP 2 634 607 A1

**Description**

TECHNICAL FIELD

The present invention relates to a film mirror having a good regular reflectance to sunlight, to a production method of the film mirror, and to a reflecting device for solar thermal power generation, which uses the film mirror.

BACKGROUND ART

In recent years, as alternative energy to be substituted for fossil fuel energy such as petroleum and natural gas, natural energy such as biomass energy, wind energy and solar energy has been studied, and at present, it is conceived to be the solar energy that is natural energy which is the most stable as the alternative energy to the fossil fuel and has the largest amount.

However, though the solar energy is extremely prepotent alternative energy, it is conceived that the following are regarded as problems from a viewpoint of fully exploiting the solar energy: (1) that an energy density of the solar energy is low; and (2) it is difficult to store and transport the solar energy.

With regard to the problem that the energy density of the solar energy is low among these problems, it is proposed to solve the problem concerned by collecting the solar energy by a huge reflecting device.

The reflecting device is exposed to ultraviolet rays and heat, which come from the sunlight, and to wind and rain, a sandstorm and the like, and accordingly, a glass-made mirror has been heretofore used for the reflecting device concerned. Although the glass-made mirror has high durability against the environment, the glass-made mirror has had such problems that breakage thereof occurs at the time of transportation, and that construction cost of a plant is increased since strength must be imparted to a pedestal on which the glass-made mirror is to be placed because of a large mass of the mirror concerned. Moreover, since the glass-made mirror is prone to be broken, it has been necessary to pay attention so as not to hurt operators by such a broken portion at the time when the glass-made mirror is replaced. Furthermore, in many cases, the glass-made mirror is placed outdoors, and a replacement operation thereof is affected by an operation environment (wind and rain, sand, dust, and the like), and accordingly, a skill is required for the replacement operation.

In order to solve the above-described problems, it has been conceived to substitute a resin-made reflecting sheet for the glass-made mirror, and this is disclosed in Patent Literature 1 for example.

For the purpose of condensing the sunlight, as disclosed in Patent Literature 2, it is preferable that a metal layer that becomes a reflecting surface be composed of silver, on which a reflectance of light within a visible light range is high, from a viewpoint that the reflecting sheet obtains a high reflectance. However, the silver has a drawback that it is prone to be corroded by environmental factors. Therefore, there has been adopted such design as to protect the silver by providing a resin layer between a sunlight incident side and a silver layer.

Moreover, in the case where the resin-made reflecting sheet or a much thinner reflecting film is substituted for the glass-made mirror, it is made possible to continuously form the reflecting sheet or the reflecting film since the reflecting sheet or the reflecting film can be wound up into a roll shape, and production efficiency of the mirror can be enhanced remarkably. However, the resin-made film has had a drawback that surfaces of the film are pasted to one another and deformed in comparison with glass.

When the film is attempted to be wound up to a roll, then the surfaces of the film are pasted to one another in a mottled fashion, causing the deformation of the film and a thickness change thereof. As a method for resolving such pasting as described above, surface treatment for improving slippage is implemented. For example, there are a method of implementing an embossing finish on both ends of the film, and a method of forming surface irregularities by mixing particles with the film. However, spots in which the embossing finish is implemented for both ends cannot be used for an end product, and are cut and discarded during production of the film, and a production loss occurs.

As described above, in the reflecting sheet and the reflecting film, it has been difficult to strike a balance between optical performance (regular reflectance) and less likeliness of the surfaces thereof being pasted to one another.

PRIOR ART LITERATURES

PATENT LITERATURES

Patent Literature 1: Japanese Patent Laid-Open Publication No. 2005-59382
Patent Literature 2: Japanese Patent Laid-Open Publication No. H06-38860

## SUMMARY OF THE INVENTION

### PROBLEMS TO BE SOLVED BY THE INVENTION

The present invention has been made in consideration of the above-described problems. It is an object of the present invention to provide a film mirror, which is lightweight and flexible, can be increased in area/mass-produced while suppressing production cost thereof, has a good regular reflectance to the sunlight, has surfaces less likely to be pasted to one another and is easy to handle at the time of being wound up to the roll shape in a production process. It is another object of the present invention to provide a production method of the film mirror, and to provide a reflecting device for solar thermal power generation, which uses the film mirror.

### MEANS FOR SOLVING THE PROBLEMS

The above-described problems related to the present invention are solved by the following means.

1. A film mirror, comprising: a resin base material; and at least an adhesive layer, a silver reflective layer and a protection layer that are provided as component layers in this order on a resin base material, wherein surface roughness Ra of a light incident side of each of the resin base material, the silver reflective layer and the protection layer is 0.005 to 0.04 $\mu$m.

2. The film mirror according to the above 1, further comprising a gas barrier layer on a side of the protection layer, on which the silver reflective layer is not present.

3. A film mirror production method for producing the film mirror according to either one of the above 1 and 2, the film mirror production method comprising the step of:

forming the silver reflective layer by silver vapor deposition.

4. A reflecting device for solar thermal power generation, which uses the film mirror according to either one of the above 1 and 2, wherein the reflecting device is formed in such a manner that the film mirror is pasted onto a metal base material through an adhesive layer coated on a surface of the resin base material on an opposite side with a side on which the silver reflective layer is provided while sandwiching the resin base material therebetween.

### EFFECTS OF THE INVENTION

In accordance with the present invention, it has been made possible to provide the film mirror, which is lightweight and flexible, can be increased in area/mass-produced while suppressing the production cost thereof, has a good regular reflectance to the sunlight, has the surfaces less likely to be pasted to one another and is easy to handle at the time of being wound up to the roll shape in the production process. Moreover, it has been made possible to provide the production method of the film mirror, and to provide the reflecting device for solar thermal power generation, which uses the film mirror.

### BRIEF DESCRIPTION OF THE DRAWINGS

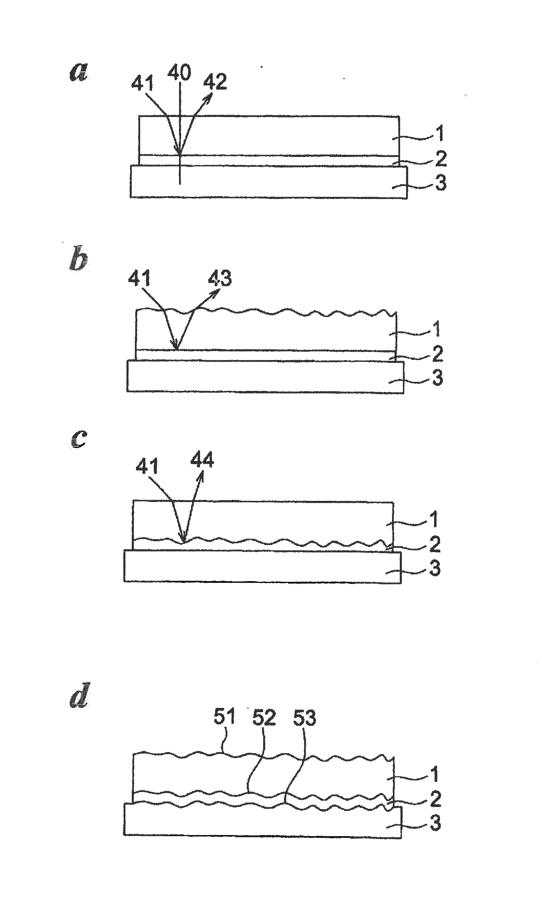

FIG. 1 is a view explaining a regular reflectance of a film mirror.

### MODE FOR CARRYING OUT THE INVENTION

A film mirror of the present invention is a film mirror, in which at least an adhesive layer, a silver reflective layer and a protection layer are provided as component layers in this order on a resin base material, characterized in that surface roughness Ra of a light incident side of each of the resin base material, the silver reflective layer and the protection layer is 0.005 to 0.04 $\mu$m. Such a feature is a technical feature common to inventions according to claims which are claim 1 to claim 4.

In accordance with embodiments of the present invention, the surface roughness Ra of the light incident side of each of the resin base material, the silver reflective layer and the protection layer is set at 0.005 to 0.04 $\mu$m, whereby a reflectance of the silver reflective layer can be suppressed from being lowered, and in addition, it is made possible to suppress surfaces of the film mirror from being pasted to one another and make the film mirror easy to handle at the time of winging up the film mirror concerned into a roll shape in a production process thereof. In this case, if excessive slippage is imparted to the surfaces of the film mirror, then the film mirror becomes difficult to handle. More preferably, the surface roughness Ra of the light incident side of each of the resin base material, the silver reflective layer and the protection layer is 0.01 to 0.03 $\mu$m.

By using FIG. 1, a description is made of regular reflection of the film mirror. FIG. 1(a) is a view showing a basic configuration and light reflection of the film mirror.

With regard to the film mirror in which an adhesive layer (not shown), a silver reflective layer 2 and a protection layer 1 are provided in this order on a resin base material 3, incident light 41, which is incident from the protection layer 1 side onto the film mirror concerned, passes through an incident optical path, and is reflected on a surface of the silver reflective layer 2, and reflected light 42 passes through a reflecting optical path, and goes out of the protection layer 1. At this time, when a surface of the protection layer 1 is not smooth as shown in FIG. 1(b), reflected light 43, which is reflected on a surface of the silver reflective layer 2, is scattered on the surface of the protection layer 1. In a similar way, when the surface of the silver reflective layer 2 is not smooth as shown in FIG. 1(c), the incident light 41 is reflected on the surface of the silver reflective layer 2, and reflected light 44 is scattered.

The light scattering as described above leads to lowering of a regular reflectance, and accordingly, it is necessary to smooth the surfaces of the protection layer and the silver reflective layer. Moreover, the resin base material is in contact with the silver reflective layer, which is a thin film, through the adhesive layer, and affects the roughness of the surface of the silver reflective layer. Accordingly, in order to obtain a good regular reflectance, it is necessary to smooth an interface 53 between the adhesive layer (not shown) and the resin base material 3 as shown in FIG. 1(d), as well as an interface 51 between the atmosphere (air) and the protection layer 1 and an interface 52 between the protection layer 1 and the silver reflective layer 2.

Meanwhile, when each of the (film-like) resin base material and the film mirror is attempted to be wound up to a roll in the production process thereof, then the surfaces of the film are pasted to one another in a mottled fashion, causing deformation of the film and a thickness change thereof. Accordingly, it is necessary to improve the slippage as a method of resolving the pasting as described above. Therefore, it is necessary that the surfaces of the resin base material and the protection layer have some surface roughness. Moreover, if the excessive slippage is imparted to the surfaces, then the resin base material and the film mirror become difficult to handle, and accordingly, the surface roughness has an upper limit.

The inventor of the present invention has studied a relationship among the surface roughness Ra, which is an index of surface smoothness of the light incident side of each of the resin base material, the silver reflective layer and the protection layer, the regular reflectance of the film mirror, and the slippage of the (film-like) resin base material and the film mirror. As a result, with regard to the regular reflectance, it is found out that the lowering of the regular reflectance concerned owing to the scattering is small if the surface roughness Ra of the light incident side of each of the resin base material, the silver reflective layer and the protection layer is 0.04 $\mu$m or less. Moreover, with regard to the slippage, it is found out that good slippage is obtained if the surface roughness Ra of each of the resin base material and the protection layer is 0.005 $\mu$m or more.

From the above, the inventor of the present invention has found out the following. In the film mirror, in which at least the adhesive layer, the silver reflective layer and the protection layer are provided as the component layers in this order on the resin base material, the surface roughness Ra of the light incident side of each of the resin base material, the silver reflective layer and the protection layer is set at 0.005 to 0.04 $\mu$m, whereby a film mirror is obtained, which strikes a balance between the regular reflectance, less likeliness of the surfaces thereof being pasted to one another, and such easiness to handle the same film mirror.

As an embodiment of the present invention, it is preferable to provide a gas barrier layer on a side of the protection layer, on which the silver reflective layer is not present, from a viewpoint of exerting the effects of the present invention.

Moreover, it is preferable that a film mirror production method of producing the film mirror of the present invention be a production method of an aspect including a step of forming the silver reflective layer by silver vapor deposition.

It is preferable that a reflecting device for solar thermal power generation, which uses the film mirror of the present invention, be a reflecting device for solar thermal power generation in an aspect formed in such a manner that the film mirror concerned is pasted onto a metal base material through an adhesive layer coated on a surface of the resin base material on an opposite side with the side on which the silver reflective layer is provided while sandwiching the resin base material therebetween.

A detailed description is made below of the present invention, constituents thereof, and modes/aspects for carrying out the present invention.

[Schematic Configuration of Film Mirror]

The film mirror of the present invention is the film mirror, in which at least the adhesive layer, the silver reflective layer and the protection layer are provided as the component layers in this order on the resin base material. It is also a preferred aspect to provide special functional layers such as the gas barrier layer and a scratch-proof layer as the component layers, as well as the adhesive layer, the silver reflective layer and the protection layer.

(Resin base material)

The present invention is characterized in that the surface roughness Ra of the light incident side of the resin base material is 0.005 to 0.04 $\mu$m.

For the purpose of setting the surface roughness Ra of the light incident side of the resin base material within this range, there are a method of using filler, a method of adjusting leveling at the time of film formation, and the like.

The surface roughness can be measured by a general method. For example, such measurement can be performed by using the Wyko NT9300 Optical Profiler made by Veeco Instruments Inc., the Ultra Accuracy 3-D Profilometer (UA3P) made by Panasonic Corporation, and the like.

The resin base material is also a rigid body for maintaining profile irregularity of the film mirror, and it is preferable that surface roughness on an opposite side of the resin base material, which is opposite with the light incident side, be within a range of 15 to 100 nm. If the surface roughness is within this range, then in an event of forming the reflecting device for solar thermal power generation by pasting the film mirror onto the metal base material through the adhesive layer, slight irregularities on the surface of the resin base material are absorbed by the adhesive layer, and less affect planarity of the film mirror and adherence between the film mirror and a support body.

As the resin base material according to the present invention, a variety of resin films, which have been heretofore known in public, can be used. For example, there can be mentioned a cellulose ester-based film, a polyester-based film, a polycarbonate-based film, a polyarylate-based film, a polysulfone (also including polyethersulfone)-based film, a film of polyester such as polyethylene terephthalate and polyethylene naphthalate, a polyethylene film, a polypropylene film, cellophane, a cellulose diacetate film, a cellulose triacetate film, a cellulose acetate propionate film, a cellulose acetate butyrate film, a polyvinylidene chloride film, a polyvinyl alcohol film, an ethylene vinyl alcohol film, a syndiotactic polystyrene-based film, a polycarbonate film, a norbornen-based resin film, a polymethyl pentene film, a polyether ketone film, a polyether ketone imide film, a polyamide film, a fluorine resin film, a Nylon film, a polymethyl methacrylate film, an acrylic film, and the like. Among them, the polycarbonate-based film, the polyester-based film, the norbornen-based resin film and the cellulose ester-based film are preferable.

In particular, it is preferable to use the polyester-based film and the cellulose ester-based film, and the resin base material may be either of a film produced by melt flow casting film formation and a film produced by solution flow casting film formation.

It is preferable to set a thickness of the resin base material concerned at an appropriate thickness in response to a type of the resin, the purpose, and the like. For example, in general, the thickness concerned is within a range of 10 to 300 $\mu$m. The thickness is preferably 20 to 200 $\mu$m, more preferably 30 to 100 $\mu$m.

(Adhesive layer)

The adhesive layer according to the present invention is not particularly limited as long as the adhesive layer concerned has a function to enhance adhesive property between the silver reflective layer and the resin base material (resin film); however, preferably, is made of resin. Hence, it is necessary that the adhesive layer concerned have adherence for adhering the resin base material (resin film) and the silver reflective layer to each other, thermal resistance for enabling the adhesive layer itself to endure heat at the time of forming the silver reflective layer by a vacuum vapor deposition method and the like, and smoothness for exploiting high reflection performance originally inherent in the silver reflective layer.

Resin as a binder for use in the adhesive layer concerned is not particularly limited as long as the resin satisfies the above-described conditions of the adherence, the thermal resistance and the smoothness. Polyester-based resin, acrylic resin, melamine-based resin, epoxy-based resin, polyamide-based resin, vinyl chloride-base resin, a vinyl chloride-vinyl acetate copolymer-based resin and the like can be used singly, or alternatively, mixed resin of these can be used. In terms of weatherability, mixed resin of the polyester-based resin and the melamine-based resin is preferable, and further, thermosetting-type resin mixed with a setting agent such as isocyanate is more preferable.

From viewpoints of the adherence, the smoothness, the reflectance of the reflecting material, and the like, a thickness of the adhesive layer concerned is preferably 0.01 to 3 $\mu$m, more preferably, 0.1 to 1 $\mu$m.

As a forming method of the adhesive layer, there can be used a coating method heretofore known in public, such as the gravure coating method, the reverse coating method, and the die coating method.

(Silver reflective layer)

The present invention is characterized in that the surface roughness Ra of the light incident side of the silver reflective layer is 0.005 to 0.04 $\mu$m.

For the purpose of setting the surface roughness Ra of the light incident side of the silver reflective layer within this range, there are a method of adjusting the surface roughness Ra of the light incident side of resin base material

so that the surface roughness Ra can be within this range, and the like since the resin base material is in contact with the silver reflective layer, which is a thin film, through the adhesive layer, and affects the roughness of the surface of the silver reflective layer.

The surface roughness can be measured by a general method. For example, in a similar way to the resin base material, such measurement can be performed by using the Wyko NT9300 Optical Profiler made by Veeco Instruments Inc., the Ultra Accuracy 3-D Profilometer (UA3P) made by Panasonic Corporation, and the like.

As a forming method of the silver reflective layer according to the present invention, either of a wet method and a dry method can be used.

The wet method is a generic term of a plating method, and is a method of forming a film by precipitating metal from a solution. As a specific example of the wet method, there are silver mirror reaction and the like.

Meanwhile, the dry method is a generic term of a vacuum film formation method. As specific examples of the dry method, there are illustrated a resistance heating-type vacuum vapor deposition method, an electron beam heating-type vacuum vapor deposition method, an ion plating method, an ion beam assist vacuum vapor deposition method, a sputtering method, and the like. Most of all, for the present invention, a vapor deposition method capable of a roll-to-roll method of continuously forming a film is preferably used. That is to say, it is preferable that such a film mirror production method of producing the film mirror of the present invention be the production method of the aspect including the step of forming the silver reflective layer concerned by the silver vapor deposition.

From viewpoints of the reflectance and the like, a thickness of the silver reflective layer concerned is preferably 10 to 200 nm, more preferably 30 to 150 nm.

In the present invention, with respect to the support body, the silver reflective layer may be located on either of such a light beam incident side thereof or an opposite side with the light beam incident side. However, since the support body is made of resin, it is preferable that the silver reflective layer be located on the light beam incident side for the purpose of preventing a deterioration of the resin by the light beam.

(Protection layer)

The present invention is characterized in that the surface roughness Ra of the protection layer is 0.005 to 0.04 $\mu$m.

For the purpose of setting the surface roughness Ra of the light incident side of the protection layer within this range, there are a method of adjusting the surface roughness Ra of the light incident side of the resin base material serving as a lower layer, a method of using the filler, a method of adjusting the leveling at the time of the film formation, and the like.

The surface roughness can be measured by a general method. For example, in a similar way to the resin base material, such measurement can be performed by using the Wyko NT9300 Optical Profiler made by Veeco Instruments Inc., the Ultra Accuracy 3-D Profilometer (UA3P) made by Panasonic Corporation, and the like.

The protection layer for use in the film mirror of the present invention is adjacent to the side of the silver reflective layer, which is farther from the resin base material (support body), and contributes to scratch prevention of the silver reflective layer, and to enhancement of adhesive force to the barrier layer or the scratch-proof layer in the case of forming the barrier layer concerned or the scratch-proof layer on the outside of the protection layer.

As resin as a binder for use in the protection layer concerned, polyester-based resin, acrylic resin, melamine-based resin, epoxy-based resin, and the like can be used singly, or alternatively, mixed resin of these can be used. In terms of the weatherability, the polyester-based resin and the acrylic resin are preferable, and further, thermosetting-type resin mixed with a setting agent such as isocyanate is more preferable.

As the isocyanate, there are usable various types of isocyanate such as a TDI (tolylene diisocyanate)-based one, an XDI (xylene diisocyanate)-based one, an MDI (methylene diisocyanate)-based one, and an HMDI (hexamethylene diisocyanate)-based one, which have been heretofore used. In terms of the weatherability, it is preferable to use the XDI-based, MDI-based or HMDI-based isocyanate.

From viewpoints of the adherence, the weatherability and the like, a thickness of the protection layer is preferably 0.01 to 3 $\mu$m, more preferably, 0.1 to 1 $\mu$m.

As a forming method of the adhesive layer, there can be used the coating method heretofore known in public, such as the gravure coating method, the reverse coating method, and the die coating method.

<Corrosion inhibitor>

The film mirror of the present invention can use a corrosion inhibitor of the silver reflective layer as a component layer. As the corrosion inhibitor, it is preferable to use a corrosion inhibitor, which is a heterocyclic compound having adsorptivity to silver, and has a melting point of 25°C or more. Here, the "corrosion" refers to a phenomenon that metal (silver) is chemically or electrochemically eroded or deteriorated in terms of material by environmental materials which surround the same metal (refer to JIS Z0103-2004).

An optimum content of the corrosion inhibitor differs depending on the compound for use; however, preferably, is within a range of 0.1 to 1.0 g/m$^2$ in general.

<Heterocyclic compound having adsorptivity to silver>

It is desirable that the corrosion inhibitor, which is the heterocyclic compound having adsorptivity to silver, and has a melting point of 25°C or more, be selected from at least one of a compound having a pyrrole ring, a compound having a triazole ring, a compound having a pyrazole ring, a compound having a thiazole ring, a compound having an imidazole ring, a compound having an indazole ring, a heterocyclic compound having a mercapto group, and the like, or from mixtures of these.

As specific examples of the corrosion inhibitor, which is the heterocyclic compound having adsorptivity to silver, and has a melting point of 25°C or more, the following compounds can be mentioned.

As compounds having the pyrrole ring, there are mentioned N-butyl-2,5-dimethyl pyrrole, N-phenyl-2,5-dimethyl pyrrole, N-phenyl-3-formyl-2,5-dimethyl pyrrole, N-phenyl-3,4-diformyl-2,5-dimethyl pyrrole, and the like, or mixtures of these.

As compounds having the triazole ring, there are mentioned 1,2,3-triazole, 1,2,4-triazole, 3-mercapto-1,2,4-triazole, 3-hydroxy-1,2,4-triazole, 3-methyl-1,2,4-triazole, 1-methyl-1,2,4-triazole, 1-methyl-3-mercapto-1,2,4-triazole, 4-methyl-1,2,3-triazole, benzotriazole, tolyltriazole, 1-hydroxybenzotriazole, 4,5,6,7-tetrahydrotriazole, 3-amino-1,2,4-triazole, 3-amino-5-methyl-1,2,4-triazole, carboxybenzotriazole, 2-(2'-hydroxy-5'-methylphenyl)benzotriazole, 2-(2'-hydroxy-5'-tert-butylphenyl)benzotriazole, 2-(2'-hydroxy-3'5'-di-tert-butylphenyl)benzotriazole, 2-(2'-hydroxy-4-octoxyphenyl)benzotriazole, and the like, or mixtures of these.

As compounds having the pyrazole ring, there are mentioned pyrazole, pyrazoline, pyrazolone, pyrazolidine, pyrazolidon, 3,5-dimethyl pyrazole, 3-methyl-5-hydroxy pyrazole, 4-amino pyrazole, and the like, or mixtures of these.

As compounds having the thiazole ring, there are mentioned thiazole, thiazoline, thiazolone, thiazolidine, thiazolidon, isothiazole, benzothiazole, 2-N,N-diethylthiobenzothiazole, P-dimethylaminobenzalrhodanine, 2-mercaptobenzothiazole, and the like, or mixtures of these.

As compounds having the imidazole ring, there are mentioned imidazole, histidine, 2-heptadecyl imidazole, 2-methyl imidazole, 2-ethyl-4-methyl imidazole, 2-phenyl imidazole, 2-undecyl imidazole, 1-benzyl-2-methyl imidazole, 2-phenyl-4-methyl imidazole, 1-cyanoethyl-2-methyl imidazole, 1-cyanoethyl-2-phenyl imidazole, 1-cyanoethyl-2-ethyl-4-methyl imidazole, 1-cyanoethyl-2-undecyl imidazole, 2-phenyl-4-methyl-5-hydroxymethyl imidazole, 2-phenyl-4,5-dihydroxymethyl imidazole, 4-formylimidazole, 2-methyl-4-formylimidazole, 2-phenyl-4-formylimidazole, 4-methyl-5-formylimidazole, 2-ethyl-4-methyl-5-formylimidazole, 2-phenyl-4-methyl-4-formylimidazole, 2-mercaptobenzoimidazole, and the like, or mixtures of these.

As compounds having the indazole ring, there are mentioned 4-chloro indazole, 4-nitro indazole, 5-nitro indazole, 4-chloro-5-nitro indazole, and the like, or mixtures of these.

As thioureas, there are mentioned, thiourea, guanyl thiourea, and the like, or mixtures of these.

As compounds having the mercapto group, besides the materials described above, there are mentioned 3-mercapto-1,2,4-triazole, 1-methyl-3-mercapto-1,2,4-triazole, 2-mercaptobenzothiazole, 2-mercaptobenzoimidazole, and the like or mixtures of these.

<Antioxidant>

To the film mirror of the present invention, an antioxidant can also be added as a component layer in addition to the above-described corrosion inhibitor.

As the antioxidant, it is preferable to use a phenol-based antioxidant, a thiol-based antioxidant, and a phosphite-based antioxidant.

As such phenol-based antioxidants, for example, there are mentioned 1,1,3-tris(2-methyl-4-hydroxy-5-t-butylphenyl)butane, 2,2'-methylenebis(4-ethyl-6-t-butylphenol), tetrakis-[methylene-3-(3',5'-di-t-butyl-4'-hydroxyphenyl)propionate]methane, 2,6-di-t-butyl-p-cresol, 4,4'-thiobis(3-methyl-6-t-butylphenol), 4,4'-butylidenebis(3-methyl-6-t-butylphenol), 1,3,5-tris(3',5'-di-t-butyl-4'-hydroxybenzyl)-S-triazine-2,4,6-(1H,3H,5H)trion, stearyl-β-(3,5-di-t-butyl-4-hydroxyphenyl)propionate, triethylene glycol-bis[3-(3-t-butyl-5-methyl-4-hydroxyphenyl)propionate], 3,9-bis{1,1-dimethyl-2-[β-(3-t-butyl-4-hydroxy-5-methylphenyl)propionyloxy]ethyl}-2,4,8,10-tetraoxaspiro[5,5]undecane, 1,3,5-trimethyl-2,4,6-tris(3,5-di-t-butyl-4-hydroxybenzyl)benzene, and the like. In particular, as the phenol-based antioxidant, those with a molecular weight of 550 or more are preferable.

As such thiol-based antioxidants, for example, there are mentioned distearyl-3,3'-thiodipropionate, pentaerythritol-tetrakis-(β-lauryl-thiopropionate), and the like.

As such phosphite-based antioxidants, for example, there are mentioned tris(2,4-di-t-butylphenyl)phosphite, distearylpentaerythritol diphosphite, di(2,6-di-t-butylphenyl)pentaerythritol diphosphite, bis-(2,6-di-t-butyl-4-methylphenyl)-pentaerythritol diphosphite, tetrakis(2,4-di-t-butylphenyl)-4,4-biphenylene-diphosphonite, 2,2'-methylenebis(4,6-di-t-butylphenyl)octylphosphite, and the like.

Note that, in the present invention, the above-described antioxidant and light stabilizer to be described below can be used in combination with each other.

As such hindered amine-based light stabilizers, for example, there are mentioned bis(2,2,6,6-tetramethyl-4-piperidyl)sebacate, bis(1,2,2,6,6-pentamethyl-4-piperidyl)sebacate, bis(1,2,2,6,6-pentamethyl-4-piperidyl)-2-(3,5-di-t-butyl-4-hydroxybenzyl)-2-n-butylmalonate, 1-methyl-8-(1,2,2,6,6-pentamethyl-4-piperidyl)sebacate, 1-{2-[3-(3,5-di-t-butyl-4-hydroxyphenyl)propionyloxy]ethyl}-4-[3-(3,5-di-t-butyl-4-hydroxyphenyl)propionyloxy]-2,2,6,6-tetramethylpiperidine, 4-benzoyloxy-2,2,6,6-tetramethylpiperidine, tetrakis(2,2,6,6-tetramethyl-4-piperidyl)-1,2,3,4-butane-tetracarboxylate, triethylenediamine, 8-acetyl-3-dodecyl-7,7,9,9-tetramethyl-1,3,8-triazaspiro[4,5]decane-2,4-dione, and the like.

Besides the above, as a nickel-based ultraviolet stabilizer, [2,2'-thiobis(4-t-octylphenolate)]-2-ethylhexylamine nickel (II), nickel complex-3,5-di-t-butyl-4-hydroxybenzyl·phosphoric acid monoethylate, nickel·dibutyl-dithio carbamate, and the like are also usable.

In particular, as the hindered amine-based light stabilizer, a hindered amine-based light stabilizer that contains only a tertiary amine is preferable. Specifically, bis(1,2,2,6,6-pentamethyl-4-piperidyl)-sebacate, bis(1,2,2,6,6-pentamethyl-4-piperidyl)-2-(3,5-di-t-butyl-4-hydroxybenzyl)-2-n-butylmalonate, or a condensate of 1,2,2,6,6-pentamethyl-4-piperidinol/tridecylalcohol and 1,2,3,4-butanetetracarboxylic acid is preferable.

(Gas barrier layer)

In the film mirror of the present invention, it is also preferable to further provide a gas barrier layer. The gas barrier layer is a layer for preventing the resin base material, a variety of functional elements protected by the resin base material concerned, and the like from being deteriorated by humidity fluctuations, and particularly, by high humidity. The gas barrier layer may be imparted with special functions/purposes, and gas barrier layers with a variety of aspects can be provided as long as such a feature as described above can be maintained. In the present invention, it is preferable to provide the gas barrier layer on the side of the protection layer, on which the silver reflective layer is not provided.

It is preferable to adjust moisture resistance of the gas barrier layer concerned so that water vapor permeability thereof at 40°C and 90% RH can become 100 $g/m^2$·day/$\mu$m or less, preferably 50 $g/m^2$·day/$\mu$m or less, more preferably 20 $g/m^2$·day/$\mu$m or less. Moreover, it is preferable that oxygen permeability of the gas barrier layer be 0.6 $ml/m^2$·day/atm or less under conditions where a measurement temperature is 23°C and humidity is 90% RH.

With regard to the gas barrier layer according to the present invention, a forming method thereof is not particularly limited; however, preferably used is a method of forming an inorganic oxide film in such a manner that a ceramic precursor of the inorganic oxide film concerned is coated, followed by heating and/or ultraviolet irradiation to such a film formed by the application of the ceramic precursor.

<Ceramic precursor>

The gas barrier layer usable in the present invention can be formed by applying a general heating method after coating the ceramic precursor that forms the inorganic oxide film by being heated. It is preferable to form the gas barrier layer by local heating. It is preferable that the ceramic precursor concerned be a sol-like organic metal compound or polysilazane.

<Organic metal compound>

It is preferable that the organic metal compound according to the present invention contain at least one element among silicon (Si), aluminum (Al), lithium (Li), zirconium (Zr), titanium (Ti), tantalum (Ta), zinc (Zn), barium (Ba), indium (In), tin (Sn), lanthanum (La), yttrium (Y), and niobium (Nb). It is particularly preferable that the organic metal compound concerned contain at least one element among silicon (Si), aluminum (Al), lithium (Li), zirconium (Zr), titanium (Ti), zinc (Zn) and barium (Ba). It is more preferable that the organic metal compound concerned contain at least one element among silicon (Si), aluminum (Al) and lithium (Li).

The organic metal compound just needs to be a hydrolysable compound, and is not particularly limited; however, metal alkoxide is mentioned as a preferable organic metal compound.

The above-described metal alkoxide is represented by the following General formula (1).

General formula (1) : $MR^2_m(OR^1)_{n-m}$

In the above-described General formula (1), M is metal with an oxidation number of n. $R^1$ and $R^2$ are alkyl

groups independently of each other. m is an integer of 0 to (n-1). $R^1$ and $R^2$ may be the same or different from each other. As each of $R^1$ and $R^2$, an alkyl group with four or less carbon atoms is preferable, and for example, more preferable is a lower alkyl group such as methyl group $CH_3$ (hereinafter, denoted as Me), an ethyl group $C_2H_5$ (hereinafter, denoted as Et), a propyl group (hereinafter, denoted as Pr), an isopropyl group $i\text{-}C_3H_7$ (hereinafter, denoted as i-Pr), a butyl group $C_4H_9$ (hereinafter, denoted as Bu), and an isobutyl group $i\text{-}C_4H_9$ (hereinafter, denoted as i-Bu).

As such metal alkoxides represented by the above-described General formula (1), for example, there are suitably mentioned lithium ethoxide LiOEt, niobium ethoxide $Nb(OEt)_5$, magnesium isopropoxide $Mg(OPr\text{-}i)_2$, aluminum isopropoxide $Al(OPr\text{-}i)_3$, zinc propoxide $Zn(OPr)_2$, tetraethoxysilane $Si(OEt)_4$, titanium isopropoxide $Ti(OPr\text{-}i)_4$, barium ethoxide $Ba(OEt)_2$, barium isopropoxide $Ba(OPr\text{-}i)_2$, triethoxyborane $B(OEt)_3$, zirconium propoxide $Zr(OPr)_4$, lanthanum propoxide $La(OPr)_3$, yttrium propoxide $Yt(OPr)_3$, lead isoproxide $Pb(OPr\text{-}i)_2$, and the like. Each metal alkoxide described above is commercially available, and can be obtained with ease. Moreover, as the metal alkoxide, a low condensate, which is to be obtained by partially hydrolyzing the metal alkoxide concerned, is also commercially available, and this is also usable as a raw material.

<Inorganic oxide>

An inorganic oxide according to the present invention is characterized in being formed of sol of the above-described organic metal compound by local heating. Hence, the inorganic oxide concerned is characterized in being an oxide of an element, such as silicon (Si), aluminum (Al), zirconium (Zr), titanium (Ti), tantalum (Ta), zinc (Zn), barium (Ba), indium (In), tin (Sn) and niobium (Nb), which is contained in the organic metal compound.

For example, the inorganic oxide is silicon oxide, aluminum oxide, zirconium oxide, and the like. Preferably, the inorganic oxide is silicon oxide among them.

In the present invention, as a method of forming the inorganic oxide from the organic metal compound, it is preferable to use a so-called sol-gel method and a method of coating polysilazane.

<Sol-gel method>

Here, the "sol-gel method" refers to a method for preparing metal oxide glass with a predetermined shape (film shape, particle shape, fiber shape and the like) in such a manner that the organic metal compound is hydrolyzed, and so on, whereby sol of hydroxide is obtained, is then dehydrated into gel, and this gel is heated. It is also possible to obtain multi-component-based metal oxide glass by a method of mixing a plurality of different sol solutions with one another, a method of adding other metal ions, and the like.

Specifically, it is preferable to produce the inorganic oxide by a sol-gel method having the following steps.

That is to say, from viewpoints that micropores, which may be caused by high-temperature heat treatment, do not occur, that a deterioration of the film, which may be caused thereby, does not occur, and so on, it is particularly preferable that the inorganic oxide be composed by being produced by a sol-gel method, which includes: the step of obtaining a reaction product by hydrolyzing and dehydrating/condensing the organic metal compound in a reaction liquid containing at least water and an organic solvent while using halogen ions as a catalyst and adjusting pH of the reaction liquid to 4.5 to 5.0 under the presence of boron ions; and the step of vitrifying the reaction product by heating the reaction product concerned at a temperature of 200°C or less.

In the above-described sol-gel method, the organic metal compound for use as a raw material just needs to be a hydrolysable compound, and is not particularly limited; however, each of the above-described metal alkoxides is mentioned as a preferable organic metal compound.

In the above-described sol-gel method, the organic metal compound may be directly used for the reaction; however, preferably, is used by being diluted by a solvent in order to facilitate control of the reaction. The solvent for such dilution just needs to be a solution capable of dissolving the organic metal compound and mixable uniformly with water. As the solvent for the dilution, which is as described above, there is suitably mentioned lower aliphatic alcohol, for example, such as methanol, ethanol, propanol, isopropanol, butanol, isobutanol, ethylene glycol, propylene glycol, and mixtures thereof. Moreover, also usable are a mixed solvent of butanol, Cellosolve, Butyl Cellosolve, a mixed solvent of xylol, Cellosolve Acetate, methyl isobutyl ketone and cyclohexane, or the like.

In the case where the metal is Ca, Mg, Al or the like in the organic metal compound, the metal concerned reacts with water in the reaction liquid and generates a hydroxide, and when carbonate ions $CO_3^{2-}$ are present, carbonate is generated to cause precipitation. Accordingly, it is preferable to add an alcohol solution of triethanolamine as a masking agent to the reaction liquid. A concentration of the organic metal compound when the organic metal compound is mixed with and dissolved into the solvent is preferably 70 mass% or less, more preferably, within a range of 5 to 70 mass% for use in such a manner that the organic metal compound is diluted.

The reaction liquid for use in the above-described sol-gel method contains at least water and the organic solvent. The above-described organic solvent just needs to a solvent that forms a uniform solution with water, acid and alkali. In usual, a solvent similar to such lower aliphatic alcohols for use in the dilution of the organic metal compound is suitably mentioned. Among the lower aliphatic alcohols, preferable are propanol, isopropanol, butanol and isobutanol, each of which has a larger carbon number than methanol and ethanol. This is because a film of the metal oxide glass to be generated is grown stably. A ratio of the water in the reaction liquid is preferably within a range of 0.2 to 50 mol/L as a concentration of the water.

In the sol-gel method, the organic metal compound is hydrolyzed while using the halogen ions as the catalyst under the presence of the boron ions in the reaction liquid. As such compounds which give the boron ions $B^{3+}$, trialkoxy boranes $B(OR)_3$ are suitably mentioned. Among them, triethoxy borane $B(OEt)_3$ is more preferable. Moreover, it is preferable that a concentration of the $B^{3+}$ ions in the reaction liquid be within a range of 1.0 to 10.0 mol/L.

As the above-described halogen ions, fluorine ions and/or chlorine ions are suitably mentioned. That is to say, the fluorine ions and the chlorine ions may be used singly, or a mixture thereof may be used. A compound for use just needs to a compound that generates the fluorine ions and/or the chlorine ions in the reaction liquid. For example, as a source of the fluorine ions, ammonium hydrogen fluoride $NH_4HF \cdot HF$, sodium fluoride $NaF$ and the like are suitably mentioned, and as a source of the chlorine ions, ammonium chloride $NH_4Cl$ and the like are suitably mentioned.

A concentration of the halogen ions in the above-described reaction liquid differs depending on a thickness of a film composed of an inorganic composite having an inorganic matrix to be produced, and on other conditions; however, in general, is within a range of 0.001 to 2 mol/kg with respect to a total mass of the reaction liquid including the catalyst, and in particular, preferably within a range of 0.002 to 0.3 mol/kg with respect thereto. When the concentration of the halogen ions is lower than 0.001 mol/kg, then it becomes difficult for the hydrolysis of the organic metal compound to progress sufficiently, and the film formation becomes difficult. Moreover, when the concentration of the halogen ions exceeds 2 mol/kg, then the inorganic matrix (metal oxide glass) to be generated becomes prone to be uneven. Accordingly, neither of both of the cases is preferable.

Note that, in the case where the boron used at the time of the reaction is contained as a $B_2O_3$ component in a designed composition of the inorganic matrix to be obtained, a product just needs to be generated while remaining addition of a calculation amount of an organic boron compound corresponding to a content of the $B_2O_3$ component concerned. Moreover, when the boron is desired to be removed, if the film is heated under the presence of methanol as the solvent or while being immersed in methanol after the film formation, then the boron can be evaporated and removed as boron methyl ester.

In the step of obtaining a reaction product by hydrolyzing and dehydrating/condensing the organic metal compound, in usual, the following procedure is adopted. First, a base compound solution is prepared by mixing and dissolving a predetermined quantity of the organic metal compound into a mixed solvent containing a predetermined quantity of water and a predetermined quantity of an organic solvent. Then, the base compound solution and a predetermined quantity of the reaction liquid containing a predetermined quantity of the halogen ions are mixed in a predetermined ratio, followed by sufficient stirring, whereby a uniform reaction solution is prepared. Thereafter, pH of the reaction solution is adjusted to a desired value by acid or alkali, followed by aging for several hours, whereby the reaction is progressed to obtain the reaction product. A predetermined quantity of the above-described boron compound is mixed and dissolved in advance in the base compound solution or the reaction liquid. Moreover, in the case of using alkoxy borane, it is advantageous to dissolve the alkoxy borane into the base compound solution together with other organic metal compounds.

pH of the reaction solution is selected according to the purpose. When the purpose is the formation of the film composed of the inorganic composite having the inorganic matrix (metal oxide glass), for example, it is preferable to adjust pH of the reaction solution within a range of 4.5 to 5 by using acids such as hydrochloric acid, followed by aging. In this case, for example, it is convenient to use, as an indicator, a mixture of methyl red and bromocresol green, and the like.

Note that, in the above-described sol-gel method, the base compound solution with the same component at the same concentration and the reaction liquid (including $B^{3+}$ and halogen ions) are added sequentially in the same ratio while adjusting pH thereof to predetermined pH, whereby the reaction product can be produced easily and continuously. Note that the concentration of the reaction solution can be changed within a range of $\pm 50$ mass%, the concentration of the water (containing acid or alkali) can be changed within a range of $\pm 30$ mass%, and the concentration of the halogen ions can be changed within a range of $\pm 30$ mass%.

Next, the reaction product (reaction solution after the aging) obtained in the previous step is heated to a temperature of 200°C or less, and is thereby dried and vitrified. In the event of the heating, it is preferable to gradually raise a temperature while particularly paying attention to a temperature range of 50 to 70°C, and to further raise the temperature after subjecting the reaction product to such a preliminary drying (solvent vaporization) step. In the case of the film formation, this drying step is important to obtain a film with non-pores. A temperature, at which the reaction product is to be heated and dried after the preliminary drying step, is preferably 70 to 150°C, more preferably, 80 to 130°C.

<Method of coating polysilazane>

It is also preferable that the gas barrier layer according to the present invention contain an inorganic oxide formed by local heating of a coating film after coating the ceramic precursor that forms an inorganic oxide film by being heated.

In the case where the ceramic precursor concerned contains polysilazane, it is preferable to adopt a method of forming a transparent coating film like glass on the resin base material in the following manner. Specifically, the resin base material is covered with polysilazane represented by the following Formula (I) and a solution in which a catalyst is contained according to needs in an organic solvent, then this solvent is removed by evaporation, whereby a polysilazane layer having a layer thickness of 0.05 to 3.0 $\mu$m is left on the resin base material, and then the above-described polysilazane layer is locally heated in the atmosphere containing water vapor under the presence of oxygen, active oxygen, and depending on the case, nitrogen.

$$\text{Formula (I): } -(\text{SiR}^1\text{R}^2\text{-NR}^3)_n-$$

In the formula, $R_1$, $R_2$ and $R_3$ may be the same or different from one another. Independently from one another, each of $R_1$, $R_2$ and $R_3$ represents hydrogen or a basic group selected from the group consisting of an alkyl group, an aryl group, a vinyl group and a (trialkoxy silyl) alkyl group, which are substituted depending on the case, preferably, hydrogen, methyl, ethyl, propyl, iso-propyl, butyl, iso-butyl, tert-butyl, phenyl, vinyl, 3-(triethoxy silyl)propyl, and 3-(trimethoxy silyl propyl) group. In this event, n is an integer, and then n is determined so that the polysilazane concerned can have a number average molecular weight of 150 to 150,000 g/mol.

As the catalyst, a basic catalyst is preferably used, and in particular, N,N-diethylethanolamine, N,N-dimethylethanolamine, triethanolamine, triethylamine, 3-morpholino propylamine, or N-heterocyclic compound is preferably used. While taking the polysilazane as a reference, a concentration of the catalyst is usually within a range of 0.1 to 10 mol%, preferably, within a range of 0.5 to 7 mol%.

In one of preferred aspects, there is used a solution containing perhydropolysilazane in which all of $R^1$, $R^2$ and $R^3$ are hydrogen atoms.

In another of the preferred aspects, the coating solution according to the present invention contains at least one of polysilazanes represented by the following Formula (II).

$$\text{Formula (II): } -(\text{SiR}^1\text{R}^2\text{-NR}^3)_n-(\text{SiR}^4\text{R}^5\text{-NR}^6)_p-$$

In the formula, independently of one another, each of $R^1$, $R^2$, $R^3$, $R^4$, $R^5$ and $R^6$ represents hydrogen, or an alkyl group, an aryl group, a vinyl group or a (trialkoxy silyl) alkyl group, which is substituted depending on the case. In this event, n and p are integers, and then n is determined so that the polysilazane concerned can have a number average molecular weight of 150 to 150,000 g/mol.

Those particularly preferable are: a compound in which $R^1$, $R^3$ and $R^6$ represent hydrogen, and $R^2$, $R^4$ and $R^5$ represent methyl; a compound in which $R^1$, $R^3$ and $R^6$ represent hydrogen, $R^2$ and $R^4$ represent methyl, and $R^5$ represents vinyl; and a compound in which $R^1$, $R^3$, $R^4$ and $R^6$ represent hydrogen, and $R^2$ and $R^5$ represent methyl.

Moreover, a solution containing at least one of polysilazanes represented by the following Formula (III) is similarly preferable.

$$\text{Formula (III): } -(\text{SiR}^1\text{R}^2\text{-NR}^3)_n-(\text{SiR}^4\text{R}^5\text{-NR}^6)_p-(\text{SiR}^7\text{R}^8-$$

$$\text{NR}^9)_q-$$

In the formula, independently of one another, each of $R^1$, $R^2$, $R^3$, $R^4$, $R^5$, $R^6$, $R^7$, $R^8$ and $R^9$ represents hydrogen, or an alkyl group, an aryl group, a vinyl group or a (trialkoxy silyl) alkyl group, which is substituted depending on the case. In this event, n, p and p are integers, and then n is determined so that the polysilazane concerned can have a number average molecular weight of 150 to 150,000 g/mol.

That particularly preferable is a compound in which $R^1$, $R^3$ and $R^6$ represent hydrogen, $R^2$, $R^4$, $R^5$ and $R^8$

represent methyl, $R^9$ represents (triethoxy silyl) propyl), and $R^7$ represents alkyl group or hydrogen.

A ratio of the polysilazane in the solvent is generally within a range of 1 to 80 mass%, preferably, within a range of 5 to 50 mass%, particularly preferably, within a range of 10 to 40 mass%.

As the solvent, such a solvent is particularly suitable, which does not contain water and a reactive group (for example, a hydroxyl group or an amine group), is inert to polysilazane, is organic, and preferably, non-protonic. For example, this is aliphatic or aromatic hydrocarbon, halogen hydrocarbon, esters such as ethyl acetate and butyl acetate for example, ketones such as acetone and methyl ethyl ketone for example, ethers such as tetrahydrofuran and dibutyl ether for example, or mono- and polyalkyleneglycol dialkyl ether (diglymes), or a mixture composed of these solvents.

An additional component to the above-described polysilazane solution can be still another binder such as that commonly used for production of paint. For example, this is cellulose ether and cellulose ester such as ethyl cellulose, cellulose nitrate, cellulose acetate and cellulose acetobutyrate for example, natural resin such as rubber and rosin resin for example, or synthetic resins such as polymerization resin and condensation resin for example, for example, aminoplast, and particularly, urea resin and melamine formaldehyde resin, alkyd resin, acrylic resin, polyester or modified polyester, epoxide, polyisocyanate or blocked polyisocyanate, or polysiloxane.

Another component of the polysilazane composition concerned can be additives or inorganic nano particles such as of $SiO_2$, $TiO_2$, $ZnO$, $ZrO_2$ and $Al_2O_3$ for example, which affect, for example, viscosity of the composition, wettability of an undercoat, film forming property, lubrication or exhaust property.

By using the method of the present invention, a dense and glass-like layer can be produced, which has an excellent barrier function to gas since there are no cracks and pores.

It is preferable that a thickness of the coating layer to be formed be set within a range of 100 nm to 2 $\mu$m.

(Scratch-proof layer)

In the present invention, a scratch-proof layer can be provided as an outermost layer of the film minor. The scratch-proof layer is provided for preventing a scratch.

The scratch-proof layer can be composed of acrylic resin, urethane-based resin, melamine-based resin, epoxy-based resin, an organic silicate compound, silicon-based resin, and the like. In particular, in terms of hardness, durability and the like, the silicon-based resin and the acrylic resin are preferable. Moreover, in terms of settability, flexibility and productivity, such a scratch-proof layer, which is composed of an active energy ray setting-type acrylic resin or thermosetting-type acrylic resin, is preferable.

The active energy ray setting-type acrylic resin or the thermosetting-type acrylic resin is a composition that contains multifunctional acrylate, an acrylic oligomer or a reactive diluent as a polymerization setting component. Resin that contains a photoinitiator, a photosensitizer, a thermal polymerization initiator, a modifying agent or the like besides the above may be used according to needs.

The acrylic oligomer includes compounds in each of which a reactive acrylic group is bonded to a skeleton of acrylic resin, the compounds including polyester acrylate, urethane acrylate, epoxy acrylate, a polyether acrylate, and the like. Moreover, such a compound is also usable, in which an acrylic group is bonded to a rigid skeleton such as melamine and isocyanuric acid.

Moreover, as a medium of a coating agent, the reactive diluent has a function as a solvent in the coating step, and in addition, has a group that reacts with a monofunctional or multifunctional acrylic oligomer by itself, and becomes a copolymerization component of the coating film.

As such multifunctional acrylic setting paint, which is commercially available, such a product as below can be used, which is: "DIA BEAM" (registered trademark) series and the like, produced by Mitsubishi Rayon Co, Ltd.; "DENACOL" (registered trademark) series and the like, produced by Nagase Sangyo Co., Ltd.; "NK ESTER" (registered trademark) series and the like, produced by Shin-Nakamura Co., Ltd.; "UNIDIC" (registered trademark) series and the like, produced by DIC Co., Ltd.; "ARONIX" (registered trademark) series and the like, produced by Toa Gosei Co., Ltd.; "BLEMER" (registered trademark) series and the like, produced by NOF Corporation; "KAYARAD" (registered trademark) series and the like, produced by Nippon Kayaku Co., Ltd.; "LIGHT ESTER" (registered trademark) series, "LIGHT ACRYLATE" (registered trademark) series and the like, produced by Kyoeisha Chemical Co., Ltd.

In the present invention, according to needs, a variety of additives can be blended into the scratch-proof layer as long as the effects of the present invention are not impaired. For example, stabilizers such as an antioxidant, a light stabilizer and an ultraviolet absorber, surfactant, a leveling agent, an antistatic agent and the like can be used.

Particularly in the event of coating the functional layers, the leveling agent is effective for reducing surface irregularities. As the leveling agent, for example, as a silicon-based leveling agent, a dimethyl polysiloxane-polyoxyalkylene copolymer (for example, SH190 produced by Dow Corning Toray Co., Ltd.) is suitable.

(Ultraviolet absorber)

In the present invention, the ultravilet absorber can be added for the purpose of preventing a deterioration of the resin base material, which may be caused by the sunlight and the ultraviolet rays. It is preferable that the ultraviolet absorber be contained in any one layer among the component layers provided on the resin base material.

As such ultraviolet absorbers, there are mentioned benzophenone-based ones, benzotriazole-based ones, phenyl salicylate-based ones, triazine-based ones and the like.

As the benzophenone-based ultraviolet absorbers, there are mentioned 2,4-dihydroxy-benzophenone, 2-hydroxy-4-methoxy benzophenone, 2-hydroxy-4-n-octoxy-benzophenone, 2-hydroxy-4-dodecyloxy-benzophenone, 2-hydroxy-4-octadecyloxy-benzophenone, 2,2'-dihydroxy-4-methoxy benzophenone, 2,2'-dihydroxy-4,4'-dimethoxy benzophenone, 2,2',4,4'-tetra-hydroxy benzophenone, and the like.

As the benzotriazole-based ultraviolet absorbers, there are mentioned 2-(2'-hydroxy-5-methylphenyl)benzotriazole, 2-(2'-hydroxy-3',5'-di-t-butylphenyl)benzotriazole, 2-(2'-hydroxy-3'-t-butyl-5'-methylphenyl)benzotriazole, and the like.

As the phenyl salicylate-based ultraviolet absorbers, there are mentioned phenyl salicylate, 2-4-di-t-butylphenyl-3,5-di-t-butyl-4-hydroxy benzoate, and the like. As such hindered amine-based ultraviolet absorbers, there mentioned bis(2,2,6,6-tetramethylpiperidine-4-yl)sebacate, and the like.

As the triazine-based ultraviolet absorbers, there are mentioned 2,4-diphenyl-6-(2-hydroxy-4-methoxyphenyl)-1,3,5-triazine, 2,4-diphenyl-6-(2-hydroxy-4-ethoxyphenyl)-1,3,5-triazine, 2,4-diphenyl-(2-hydroxy-4-propoxyphenyl)-1,3,5-triazine, 2,4-diphenyl-(2-hydroxy-4-butoxyphenyl)-1,3,5-triazine, 2,4-diphenyl-6-(2-hydroxy-4-butoxyphenyl)-1,3,5-triazine, 2,4-diphenyl-6-(2-hydroxy-4-hexyloxyphenyl)-1,3,5-triazine, 2,4-diphenyl-6-(2-hydroxy-4-octyloxyphenyl)-1,3,5-triazine, 2,4-diphenyl-6-(2-hydroxy-4-dodecyloxyphenyl)-1,3,5-triazine, 2,4-diphenyl-6-(2-hydroxy-4-benzyloxyphenyl)-1,3,5-triazine, and the like.

Besides the above-described compounds, the ultraviolet absorbers include a compound that has a function to convert energy in the ultraviolet rays into vibration energy in molecules and to discharge the vibration energy concerned as heat energy and the like. Moreover, such a compound that exerts an effect thereof by being used in combination with an antioxidant, a colorant or the like, or a light stabilizer called a quencher, which acts as a light energy conversion agent, and the like can also be used in combination. However, in the case of using the above-described ultraviolet absorbers, it is necessary to select those in each of which an optical absorption wavelength of the ultraviolet absorber concerned does not overlap an effective wavelength of a photopolymerization initiator.

In the case of using a usual ultraviolet inhibitor, it is effective to use a photopolymerization initiator that generates radicals from visible light.

A usage amount of such an ultraviolet absorber is 0.1 to 20 mass%, preferably 1 to 15 mass%, more preferably, 3 to 10 mass%. When the usage amount is larger than 20 mass%, the adherence between the resin film and the silver reflective layer is deteriorated, and when the usage amount is smaller than 0.1 mass%, a weatherability improvement effect of the ultraviolet absorber is small.

(Thickness of entire film mirror)

From viewpoints of flexure prevention, regular reflectance, handling easiness of the mirror, the thickness of the entire film mirror according to the present invention is preferably 75 to 250 $\mu$m, more preferably 90 to 230 $\mu$m, still more preferably 100 to 220 $\mu$m.

(Reflecting device for solar thermal power generation)

The film mirror of the present invention can be preferably used for the purpose of condensing the sunlight. The film mirror can be used singly as a sunlight condensing mirror; however, it is more preferable to use the film mirror as a component of the reflecting device for solar thermal power generation, which is configured as below. That is to say, the film mirror concerned is pasted onto the other base material, the metal base material in particular, through the adhesive layer coated on the surface of the resin base material on the opposite side with the side on which the silver reflective layer is provided while sandwiching the resin base material therebetween.

In the case of using the film mirror as a component of the reflecting device for solar thermal power generation, as an embodiment, the following embodiment is mentioned, in which the reflecting device is formed into a gutter shape (semi-cylindrical shape), a cylindrical member having fluid in an inside thereof is provided in a center portion of a semi-circle, such internal fluid is heated by condensing the sunlight to the cylindrical member, and heat energy thus obtained is converted to generate electric power. Moreover, as another embodiment, the following embodiment is also mentioned, in which tabular reflecting devices are placed at a plurality of spots, the sunlight reflected on the respective reflecting devices is condensed to one reflecting mirror (central reflecting mirror), and heat energy obtained by reflection on the reflecting mirror is converted by a power generation unit to generate electric power. In particular, in the latter embodiment, a high regular reflectance is required for the reflecting device for use, and accordingly, the film mirror or the present invention is used particularly suitably.

<Adhesive layer>

The adhesive layer is not particularly limited, and for example, any of a dry laminate agent, a wet laminate agent, an adhesion agent, a heat sealing agent, a hot melt agent and the like are used.

For example, polyester-based resin, urethane-based resin, polyvinyl acetate-based resin, acrylic resins, nitrile rubber and the like are used.

A lamination method is not particularly limited, and it is preferable to continuously perform the lamination method, for example, in a roll system in terms of cost efficiency and productivity.

It is preferable that a thickness of the adhesive layer be usually within an approximate range of 1 to 50 $\mu$m from viewpoints of an adhesion effect, a drying speed and the like.

The other base material, which is to be appropriately employed for the present invention and to be pasted to the film mirror of the present invention, just needs to be capable of protecting the silver reflective layer. For example, there are used: an acrylic film or sheet, a polycarbonate film or sheet, a polyarylate film or sheet, a polyethylene naphthalate film or sheet, a polyethylene terephthalate film or sheet, a plastic film or sheet such as a fluorine film, a resin film or sheet into which titanium oxide, silica, aluminum powder, copper powder or the like is kneaded, and a resin film or sheet, which is coated with resin into which each of these is kneaded, or which is subjected to surface treatment such as metal evaporation.

A thickness of the film or the sheet, which is to be pasted to the film mirror of the present invention, is not particularly limited; however, it is preferable that the thickness concerned be usually within a range of 12 to 250 $\mu$m.

Moreover, these other base materials may be pasted to the film mirror of the present invention in such a manner that recessed portions and protruding portions may be provided thereon before the other base materials concerned are pasted thereto. Alternatively, the other base materials may be molded so that the recessed portions and the protruding portions can be provided after the other base materials concerned are pasted to the film mirror of the present invention. Alternatively, the other base materials may be simultaneously subjected to such pasting and such molding to provide the recessed portions and the protruding portions.

<Metal base material>

As the metal base material of the sunlight condensing mirror according to the present invention, usable is a metal material with a high thermal conductivity, such as a steel plate, a copper plate, an aluminum plate, an aluminum-plated steel plate, an aluminum-based alloy-plated steel plate, a copper-plated steel plate, a tin-plated steel plate, a chromium-plated steel plate, and a stainless steel plate.

In the present invention, it is particularly preferable to use the plated steel plate, the stainless steel plate, the aluminum plate and the like, which have good corrosion resistance.

EXAMPLES

A specific description is made below of the present invention while mentioning examples; however, the present invention is not limited to this.

[Preparation of Film Mirrors]

(Preparation of Film mirror 1)

As a base material, a biaxially-stretched polyester film (resin base material: polyethylene terephthalate film; thickness; 100 $\mu$m) with surface roughness Ra of 0.003 $\mu$m was used. On one surface of the above-described polyethylene terephthalate film, an adhesive layer with a thickness of 0.1 $\mu$m was formed in the following manner. That is to say, polyester resin (Polyester SP-181 produced by The Nippon Synthetic Chemical Industry Co., Ltd.), melamine resin (Super Beckamine J-820 produced by DIC Corp.), the TDI-based isocyanate (2,4-tolylene diisocyanate) and the HDMI-based isocyanate (1,6-hexamethylene diisocyanate) were mixed into toluene in a solid resin ratio of 20: 1: 1: 2 so that a solid concentration thereof could become 10 mass%, whereby mixed resin was obtained. The mixed resin thus obtained was coated on the base material by the gravure coating method, whereby an adhesive layer with a thickness of 0.1 $\mu$m was formed. On the adhesive layer, a silver reflective layer with a thickness of 80 nm was formed as the silver reflective layer by the vacuum vapor deposition method. On the silver reflective layer, resin obtained by mixing the polyester-based resin and the TDI (tolylene diisocyanate)-based isocyanate with each other in a solid resin ratio of 10: 2 was coated by the gravure coating method, whereby a protection layer with a thickness of 0.1 $\mu$m and surface roughness Ra of 0.003 $\mu$m was formed. In such a way, Film mirror 1 was prepared. Note that mercapto acetate (glycol dimercaptoacetate) was contained as a corrosion inhibitor in the protection layer so that a content thereof could become 0.3 g/m$^2$.

(Preparation of Film mirrors 2 to 9)

Film mirrors 2 to 9 were prepared in a similar way to the preparation of Film mirror 1 except that biaxially-stretched polyester films (polyethylene terephthalate films; thickness: 100 $\mu$m) listed in Table 1 were used, and that production conditions were adjusted so that the surface roughness of each of the silver reflective layer and the protection layer could become surface roughness listed in Table 1. Note that the biaxially-stretched polyester films (resin base materials) and the surface roughness of each of the silver reflective layer and the protection layer were changed by leveling adjustment performed at the time of forming the biaxially-stretched polyester films (resin base materials) and the silver reflective layers.

[Measurement and Evaluation of Film Mirrors]

For the sunlight condensing mirrors obtained as described above, the surface roughness of each thereof was measured by the following method, and the regular reflectance and slippage thereof were evaluated.

(Surface roughness)

The surface roughness was measured by using the Wyko NT9800 Optical Profiler made by Veeco Instruments Inc. Note that the surface roughness of each of the resin base material and the silver reflective layer was measured before forming the adhesive layer and the protection layer thereon, respectively.

(Regular reflectance)

An apparatus, in which an integrating sphere reflection attachment was attached to the spectrophotometer U4100 made by Hitachi, Ltd. was modified. An incident angle of incident light was adjusted so as to become 5° with respect to a normal of the reflecting surface, and a regular reflectance at a reflection angle of 5° was measured. In the event of the evaluation, an average of the regular reflectances from 350 nm to 700 nm was measured, and was evaluated according to the following criteria.
Double circle (◎) in Table: Regular reflectance is 95% or more (excellent)
Single circle (○) in Table: Regular reflectance is 93% or more to less than 95% (acceptable)
Cross (×) in Table: Regular reflectance is less than 93% (unacceptable)

(Less likeliness of being pasted, handling easiness)

A static friction coefficient was measured as an index of the less likeliness of the surfaces of the film mirror and the handling easiness of the film mirror. For the film mirror held for one day under conditions where the temperature was 20°C and the humidity was 60% RH, a static friction coefficient thereof was measured by using the Friction Tester TR-2 (made by Toyo Seiki Seisaku-Sho, Ltd.), and was evaluated according to the following criteria. A range of 0.2 or more to less than 0.5 is an optimum range of the above-described less likeliness and handling easiness.
Single circle (○) in Table: Static friction coefficient is less than 0.2 (acceptable)
Double circle (◎) in Table: Static friction coefficient is 0.2 or more to less than 0.5 (excellent)
Cross (×) in Table: Static friction coefficient is 0.5 or more (unacceptable)
Table 1 shows results of the measurements and the evaluations.
[Table 1]

| FILM MIRROR No. | RESIN BASE MATERIAL Ra ($\mu$m) | SILVER REFLECTIVE LAYER Ra ($\mu$m) | PROTECTION LAYER Ra ($\mu$m) | REGULAR REFLECTANCE | LESS LIKELINESS OF BEING PASTED, HANDLING EASINESS | REMARKS |
|---|---|---|---|---|---|---|
| 1 | 0.003 | 0.003 | 0.003 | ◎ | × | Comparative example |
| 2 | 0.005 | 0.005 | 0.005 | ◎ | ○ | Present invention |
| 3 | 0.01 | 0.01 | 0.01 | ◎ | ◎ | Present invention |
| 4 | 0.02 | 0.02 | 0.02 | ◎ | ◎ | Present invention |
| 5 | 0.03 | 0.03 | 0.03 | ◎ | ◎ | Present invention |
| 6 | 0.04 | 0.04 | 0.04 | ○ | ○ | Present invention |
| 7 | 0.05 | 0.05 | 0.05 | × | ○ | Comparative example |
| 8 | 0.04 | 0.04 | 0.06 | × | ○ | Comparative example |
| 9 | 0.06 | 0.06 | 0.04 | × | ○ | Comparative example |

As apparent from Table 1, it is understood that a balance was struck between the regular reflectance and the less likeliness of being pasted and the handling easiness in each of Film mirrors 2 to 6 of the present invention. That is to say, by the above-described means of the present invention, it has been made possible to provide the film mirror, which is lightweight and flexible, can be increased in area/mass-produced while suppressing the production cost thereof, has the good regular reflectance to the sunlight, has the surfaces less likely to be pasted to one another and is easy to handle at the time of being wound up to the roll shape.

INDUSTRIAL APPLICABILITY

The present invention is configured as described above, and accordingly, can be utilized as a film mirror, a production method of the film mirror, and a reflecting device for solar thermal power generation, which uses the film mirror.

EXPLANATION OF REFERENCE NUMERALS

1          PROTECTION LAYER

2          SILVER REFLECTIVE LAYER

3          RESIN BASE MATERIAL

41          INCIDENT LIGHT

42, 43, 44   REFLECTED LIGHT

51          INTERFACE BETWEEN ATMOSPHERE (AIR) AND PROTECTION LAYER

52 INTERFACE BETWEEN PROTECTION LAYER AND SILVER REFLECTIVE LAYER

53 INTERFACE BETWEEN ADHESIVE LAYER AND RESIN BASE MATERIAL

## Claims

1. A film mirror, comprising:

   a resin base material; and
   at least an adhesive layer, a silver reflective layer and a protection layer that are provided as component layers in this order on a resin base material,
   wherein surface roughness Ra of a light incident side of each of the resin base material, the silver reflective layer and the protection layer is 0.005 to 0.04 $\mu$m.

2. The film mirror according to claim 1, further comprising a gas barrier layer on a side of the protection layer, on which the silver reflective layer is not present.

3. A film mirror production method for producing the film mirror according to either one of claims 1 and 2, the film mirror production method comprising the step of:

   forming the silver reflective layer by silver vapor deposition.

4. A reflecting device for solar thermal power generation, which uses the film mirror according to either one of claims 1 and 2, wherein the reflecting device is formed in such a manner that the film mirror is pasted onto a metal base material through an adhesive layer coated on a surface of the resin base material on an opposite side with a side on which the silver reflective layer is provided while sandwiching the resin base material therebetween.

*a*

*b*

*c*

*d*

## INTERNATIONAL SEARCH REPORT

| | International application No. |
| --- | --- |
| | PCT/JP2011/074226 |

A. CLASSIFICATION OF SUBJECT MATTER
*G02B5/08*(2006.01)i, *B32B15/08*(2006.01)i

According to International Patent Classification (IPC) or to both national classification and IPC

B. FIELDS SEARCHED

Minimum documentation searched (classification system followed by classification symbols)
G02B5/08, B32B15/08

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 61-154942 A  (Minnesota Mining and Manufacturing Co.), 14 July 1986 (14.07.1986), claims (1), (2); page 2, upper right column, line 19 to lower left column, line 4; page 6, lower left column, line 18 to lower right column, line 16; fig. 2 <br> & US 4645714 A  & EP 187491 A1 <br> & DE 3570139 D  & AU 5046085 A <br> & BR 8506407 A  & CA 1245493 A <br> & IL 77420 A  & ZA 8509495 A <br> & IN 166608 A  & KR 10-1994-0000087 B <br> & AU 570140 B | 1–4 |

☒ Further documents are listed in the continuation of Box C.  ☐ See patent family annex.

| | |
| --- | --- |
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search <br> 08 November, 2011 (08.11.11) | Date of mailing of the international search report <br> 15 November, 2011 (15.11.11) |
| --- | --- |
| Name and mailing address of the ISA/ <br> Japanese Patent Office | Authorized officer |
| Facsimile No. | Telephone No. |

Form PCT/ISA/210 (second sheet) (July 2009)

| | INTERNATIONAL SEARCH REPORT | International application No. |
|---|---|---|
| | | PCT/JP2011/074226 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2010-237415 A (Konica Minolta Opto, Inc.), 21 October 2010 (21.10.2010), paragraphs [0064], [0086]; fig. 1 & US 2010/0245991 A1 | 2 |
| Y | JP 2010-231016 A (Sumitomo Chemical Co., Ltd.), 14 October 2010 (14.10.2010), paragraph [0031] (Family: none) | 1-4 |
| A | JP 2009-25716 A (Toyo Kohan Co., Ltd.), 05 February 2009 (05.02.2009), claims 1, 10; paragraphs [0014] to [0016] & US 2010/0053785 A1 & EP 2172793 A1 & WO 2009/013944 A1 & CN 101680975 A | 1-4 |

Form PCT/ISA/210 (continuation of second sheet) (July 2009)

**EP 2 634 607 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005059382 A
- JP H0638860 B